# EUROPÄISCHE PATENTANMELDUNG

(11) **EP 1 652 864 A1**
(43) Veröffentlichungstag der Anmeldung: **03.05.2006**
(21) Anmeldenummer: 05022645.5
(22) Anmeldetag: 18.10.2005
(51) Int. Cl.: C08F 212/08, C08F 212/36

(54) **Verfahren zur Herstellung von silberhaltigen Perlpolymerisaten**

(30) Priorität: 30.10.2004 DE 102004052720
(71) Anmelder: LANXESS Deutschland GmbH, 51369 Leverkusen (DE)
(72) Erfinder: Podszun, Wolfgang, Dr., 51061 Köln (DE); Klipper, Reinhold, Dr., 50933 Köln (DE); Halle, Olaf, Dr., 51061 Köln (DE); Wagner, Rudolf, Dr., 51061 Köln (DE); De Ruiter, Ernest Henri, Dr., 51381 Leverkusen (DE)

(57) **Zusammenfassung**

Die vorliegende Erfindung betrifft ein Verfahren zur Herstellung eines silberhaltigen Perlpolymerisats, dadurch gekennzeichnet, dass man
I) ein Gemisch aus
   a) Styrol
   b) Vernetzer
   c) organischem Silbersalz
   d) Radikalstarter und gegebenenfalls
   e) Inertmittel erzeugt und
II) das erhaltene Gemisch in wässriger Phase bei erhöhter Temperatur zu einem Perlpolymerisat aushärtet.

## Beschreibung

Die vorliegende Erfindung betrifft ein Verfahren zur Herstellung von silberhaltigen Perlpolymerisaten auf Basis von vernetztem Polystyrol.

Perlpolymerisate aus vernetztem Polystyrol werden in vielfältiger Weise zur Herstellung von Ionenaustauschern, Adsorbern und Chromatographieharzen eingesetzt. Die Teilchengrösse üblicher Perlpolymerisate liegt dabei in einem Bereich von 50 -500 *µ*m.

Bei vielen Anwendungen werden säulenförmige, mit kugelförmigen Ionenaustauschern, Chromatographieharzen oder Adsorbern gefüllte Filter mit Flüssigkeiten oder Gasen durchströmt. Es hat sich nun gezeigt, dass die Verkeimung der Ionenaustauscher, Chromatographieharze oder Adsorber in der Praxis ein beträchtliches Problem darstellen kann. Diese Verkeimung muss besonders bei der Reinigung von Trinkwasser und der Behandlung von Lösungen in der Lebensmittelindustrie sicher verhindert werden. Ein Weg zur Verhinderung der Abgabe von Bakterien oder anderen Keimen von der Filtereinheit an die zu behandelnden Flüssigkeiten oder Gase besteht darin, dass die Filtereinheit einschließlich der darin enthaltenen Ionenaustauscher, Chromatographieharze oder Adsorber in bestimmten Zeitabständen desinfiziert wird. Diese Methode hat allerdings den Nachteil, dass die Produktivität der Filtereinheit herabgesetzt wird. Zusätzlich wird in der Regel die Lebensdauer der Ionenaustauscher, Chromatographieharze oder Adsorber durch die Einwirkung des Desinfektionsmittels verkürzt.

Es ist bekannt, Silber oder Silbersalze als biozide Additive beim Einsatz von Ionenaustauschern zu verwenden. Allerdings ist die Dotierung von fertigen Ionenaustauschern in der Praxis schwierig. Sofern die Anbindung des silberhaltigen Additivs nicht ausreichend fest ist, wird das Additiv während des Gebrauches ausgespült und die Wirkung verschwindet. Es besteht ein Bedarf für silberhaltige Ionenaustauscher, Chromatographieharze oder Adsorber, die eine biozide Wirkung aufweisen und diese bei langzeitigem Gebrauch nicht verlieren. Es wurde nun gefunden, dass derartige Ionenaustauscher, Chromatographieharze oder Adsorber erhalten werden können, wenn man diese durch Funktionalisieren von silberhaltigen Perlpolymerisaten auf Basis von vernetztem Polystyrol erzeugt.

Die Aufgabe der vorliegenden Erfindung ist die Bereitstellung von vemetzten Polystyrol-Perlpolymerisaten, welche mit Silber oder Silbersalzen dotiert sind, als Ausgangsmaterial für Ionenaustauscher, Adsorber und Chromatographieharze.

Es wurde ein Verfahren zur Herstellung eines silberhaltigen Perlpolymerisats gefunden, welches dadurch gekennzeichnet ist, dass man
I) ein Gemisch aus
   a) Styrol
   b) Vernetzer
   c) organischem Silbersalz
   d) Radikalstarter und gegebenenfalls
   e) Inertmittel erzeugt, und
II) das erhaltene Gemisch in wässriger Phase bei 60 bis 130°C zu einem Perlpolymerisat aushärtet.

Unter Styrol (a) im Sinne der Erfindung werden neben nicht substituiertem Styrol auch substituierte Styrole, wie z.B. Vinylnaphthalin, Vinyltoluol, Ethylstyrol, α-Methylstyrol und Chlorstyrole verstanden.

Vernetzer (b) sind Verbindungen, die zwei oder mehr, vorzugsweise zwei bis vier radikalisch polymerisierbare Doppelbindungen pro Molekül enthalten. Beispielhaft seien genannt: Divinylbenzol, Divinyltoluol, Trivinylbenzol, Divinylnaphthalin, Trivinylnaphthalin, Diethylenglycoldivinylether, Octadien-1,7, Hexadien-1,5, Diethylenglycoldivinylether und Butandioldivinylether.

Der Anteil an Vernetzer beträgt im Allgemeinen 1 bis 80 Gew.-%, bevorzugt 2 bis 16 Gew.-% bezogen auf die Summe der Komponenten (a) und (b).

Organisches Silbersalz (c) im Sinne der Erfmdung sind Salze von einbasigen und mehrbasigen Carbonsäuren und Komplexbildnern. Beispielhaft seien genannt: Silberformiat, Silberacetat, Silbertrifluoracetat, Silberpropionat, Silberpentafluorpropionat, 4-Cyclohexylbuttersäure-Silbersalz, Silber-2-ethylhexanoat, Silberoctanoat, Silberdecanoat, Silberlaurat, Silberstearat, Silberbehenat, Silberbenzoat, Silberlactat, Silbertartrat, Silbercitrat und Silberacetylacetonat. Gut geeignet sind auch polymerisierbare Silbersalze wie Silberacrylat und Silbermethacrylat.

Das organische Silbersalz (c) kann im Gemisch der Komponenten (a) und (b) teilweise oder vollständig löslich sein. Die Löslichkeit ist allerdings keine Vorrausetzung zur Durchführung des erfindungsgemäßen Verfahrens. Silbersalze, die nicht oder nicht vollständig in (a) und (b) löslich sind, werden in feinteiliger suspendierter Form eingesetzt. Dabei kann die feinteilige Suspension mit üblichen Methoden, beispielsweise mit Schnellrührern, Rotorstatormischern, Kugelmühlen oder Perlmühlen erzeugt werden. Vorteilhaft ist auch eine zusätzliche Behandlung mit Ultraschall. Feinteilig bedeutet in diesem Zusammenhang, dass die Größe der Silbersalzpartikel im Bereich von 10 nm - 20 µm, vorzugsweise 100 nm - 10 µm liegt.

Die Menge des organischen Silbersalzes (c) beträgt 0,001 - 10 Gew.-%, bevorzugt 0,01 - 2 Gew.-%, besonders bevorzugt 0,03 - 1 Gew.-%, bezogen auf die Komponenten a, b und c.

Zur Aktivierung können übliche monomerlösliche Radikalbildner (d) verwendet werden. Beispielhaft seien genannt: Peroxid- und Azoverbindungen, wie Dibenzoylperoxid, Dilauroylperoxid, Cyclohexylpercarbonat und Azoisobuttersäuredinitril. Gut geeignet sind auch Mischungen von Polymerisationsinitiatoren mit unterschiedlichen Zerfallstemperaturen. Um vorzeitiges Anpolymerisieren zu vermeiden, ist es zweckmäßig, den Starter erst unmittelbar vor dem Dispergieren zuzusetzen. Der Radikalbildner wird in einer Menge von 0,05 - 2 Gew.-%, vorzugsweise 0,1 - 0,8 Gew.-%, bezogen auf die Summe der Komponenten a und b, eingesetzt.

Als Inertmittel (e) sind mit Wasser nicht mischbare, organische Flüssigkeiten geeignet. Bevorzugt genannt seien aliphatische oder aromatische Kohlenwasserstoffe und Alkohole mit bis zu 20 C-Atomen, wie Hexan, Heptan, Isodecan, Benzol, Toluol oder Oktanol, Halogenkohlenwasserstoffe, wie Di-, Tri-, Tetrachlormethan oder 1,2-Dichlorethan, Ester, wie Essigsäuremethylester, Essigsäurebutylester oder Dialkylcarbonate und nicht wasserlösliche Ketone, wie Methylisobutylketon oder Cyclohexanon. Durch den Einsatz von Inertmittel kann im erfindungsgemäßen Perlpolymerisat eine poröse Struktur erzeugt werden.

Das Gewichtsverhältnis von Inertmittel zu der Summe der Komponenten a und b beträgt 0,1 : 1 bis 3 : 1, vorzugsweise 0,5 : 1 bis 2 : 1.

Das aktivierte silberhaltige Monomergemisch wird mittels einer Wasserphase dispergiert. Um möglichst gleichmäßige Perlen zu erzeugen, ist es vorteilhaft, die Wasserphase vorzulegen und das Monomergemisch langsam unter Rühren zuzusetzen.

Das Verhältnis von Monomerphase zu Wasserphase beträgt 1,2 : 1 bis 1 : 6, vorzugsweise 1 : 1,3 bis 1 : 3.

Die Wasserphase enthält ein Dispergiermittel. Als Dispergiermittel sind alle zu diesem Zweck an sich bekannten wasserlöslichen makromolekularen Verbindungen, z. B. Cellulosederivate, wie Methylcellulose und teilverseifte Polyvinylacetate geeignet. Gut geeignet sind auch Copolymerisate aus (Meth)acrylsäure und (Meth)acrylsäurealkylester. Beispielhaft genannt sei die alkalische Lösung eines Copolymerisates aus Methacrylsäure und Methylmethacrylat. Der Gehalt an Dispergiermittel soll vorzugsweise 0,5 bis 5 Gew.-%, bezogen auf die Wasserphase, betragen.

Die Polymerisation wird durch Erhitzen auf die Zerfallstemperatur des Polymerisationsinitiators eingeleitet. Bevorzugte Polymerisationstemperaturen liegen im Bereich von 60 bis 90°C. Die Polymerisation dauert in der Regel einige Stunden, beispielsweise 5 bis 10 h. Nach dem Abklingen der Reaktion kann die Temperatur gegebenenfalls unter erhöhtem Druck, z.B. 1 bis 6 bar, vorzugsweise 1 bis 3 bar, weiter auf beispielsweise 130°C erhöht werden.

Aus der polymerisierten Dispersion wird das Perlpolymerisat auf bekannte Weise durch Dekantieren, Filtrieren, Waschen und Trocknen isoliert.

Die erfindungsgemäßen Perlpolymerisate eignen sich in hervorragender Weise als Ausgangsmaterialien für Ionenaustauscher, Chelatharze, Chromatographieharze und Adsorberharze. Die daraus hergestellten Endprodukte weisen eine signifikant reduzierte Verkeimungsrate auf.

Die Funktionalisierung der erfindungsgemäßen Perlpolymerisate zu Ionenaustauschern erfolgt nach bekannten Methoden. Stark saure Ionenaustauscher lassen sich durch Sulfonierung mit konzentrierter Schwefelsäure, Oleum oder Chlorsulfonsäure herstellen. Anionenaustauscher werden durch Aminomethylierung oder Chlormethylierung mit nachfolgender Aminierung erhalten.

Auch zur Herstellung von kugelförmiger Aktivkohle durch Carbonisierungsreaktion sind die erfindungsgemäßen Perlpolymerisate hervorragend geeignet.

### Beispiel 1

### Herstellung eines silberhaltigen Perlpolymerisates

In einen 41- Planschliffreaktor mit Gitterrührer, Kühler, Temperaturfühler sowie Thermostat und Schreiber wird eine wässrige Lösung aus 5,4 g Methylhydroxyethylcellulose, 4,82 g Dinatriumhydrogenphoshat und 1900 g entionisiertes Wasser vorgelegt.

In einem separaten Rührgefäss werden 963,4 g Styrol und 49,89 g Divinylbenzol (81,2 gew.-%ig) gemischt. In die erhaltene Mischung werden 5,25 g Silberbehenat zugegeben und 4 min. bei 24.000 U/min. mit einem Rotor-Stator-Mischer dispergiert. Anschließend werden 6,0 g Dibenzoylperoxid zugegeben und innerhalb von 20 min. in der erhaltenen Dispersion gelöst.

Die aktivierte Dispersion wird durch einen verlängerten Trichter unter Rühren mit 240 U/min. in den vorbereiteten 41- Planschliffreaktor bei 55°C unter die Oberfläche der wässrige Phase eingetragen. Nun wird auf 63°C aufgeheizt, wobei in den ersten 15 min. ein Stickstoffstrom von 20 l/min. übergeleitet wird. Es wird 6 h bei 63°C erwärmt, dann innerhalb einer Stunde die Temperatur auf 95°C erhöht und noch 2 h bei 95°C gehalten. Nach dem Abkühlen wird das Polymerisat über einem 100 µm - Sieb mit viel Wasser gewaschen, dann bei 80°C getrocknet. Man erhält 950 g regelmäßige Perlen mit der durchschnittlichen Korngröße von 380 µm. Der Silbergehalt beträgt 0,1 Gew.-%.

### Beispiel 2

### Herstellung eines silberhaltigen Perlpolymerisates

Entsprechend der Arbeitsweise aus Beispiel 1 wird ein Gemisch aus 913,5 g Styrol und 99,8 g Divinylbenzol (81,2 gew.-%ig), 4,75 g Silber-2-ethylhexanoat und 6,0 g Dibenzoylperoxid zu einem Perlpolymerisat ausgehärtet. Man erhält 968 g regelmäßige Perlen mit der durchschnittlichen Korngröße von 375 µm. Der Silbergehalt beträgt 0,2 Gew.-%.

## Patentansprüche

1. Verfahren zur Herstellung eines silberhaltigen Perlpolymerisats, **dadurch gekennzeichnet, dass** man
I) ein Gemisch aus
a) Styrol
b) Vernetzer
c) organischem Silbersalz
d) Radikalstarter und gegebenenfalls
e) Inertmittel erzeugt und
II) das erhaltene Gemisch in wässriger Phase bei 60 bis 130°C zu einem Perlpolymerisat aushärtet.

2. Verfahren nach Anspruch 1, **dadurch gekennzeichnet, dass** man 0,001 - 10 Gew.-% organisches Silbersalz bezogen auf die Summe der Komponenten a, b und c einsetzt.

3. Verfahren nach einem der Ansprüche 1 oder 2, **dadurch gekennzeichnet, dass** es sich bei dem organischen Silbersalz um Silberformiat, Silberacetat, Silbertrifluoracetat, Silberpropionat, Silberpentafluorpropionat, 4-Cyclohexylbuttersäure-Silbersalz, Silber-2-ethylhexanoat, Silberoctanoat, Silberdecanoat, Silberlaurat, Silberstearat, Silberbehenat, Silberbenzoat, Silberlactat, Silbertartrat, Silbercitrat, Silberacetylacetonat, Silberacrylat oder Silbermethacrylat handelt.

4. Verfahren nach einem der Ansprüche 1 bis 3, **dadurch gekennzeichnet, dass** die Aushärtung des Perlpolymerisates bei einer Temperatur von 60 bis 90°C durchgeführt wird.

5. Verwendung des nach Anspruch 1 erhaltenen Perlpolymerisats als Ausgangsmaterial für Ionenaustauscher, Chelatharze, Chromatographieharze und Adsorberharze.

6. Verwendung des nach Anspruch 1 erhaltenen Perlpolymerisats als Ausgangsmaterial für kugelförmige Aktivkohle.
